# FASCICULE DE BREVET EUROPEEN

(11) **EP 4 106 590 B1**
(45) Date de publication et mention de la délivrance du brevet: **31.01.2024**
(21) Numéro de dépôt: 21702692.1
(22) Date de dépôt: 08.02.2021
(51) Int. Cl.: A47J 43/20

(54) **MOULE VERSATILE**
VIELSEITIGE FORM
VERSATILE MOULD

(30) Priorité: 21.02.2020 FR 2001765
(43) Date de publication de la demande: 28.12.2022
(73) Titulaire: SEB S.A., 69130 Ecully (FR)
(72) Inventeur: PLICHON, Stéphane, 74350 ALLONZIER-LA-CAILLE (FR); SUCHET, Stéphane, 74150 MARCELLAZ-ALBANAIS (FR)
(74) Mandataire: SEB Développement
(86) Numéro de dépôt international: PCT/EP2021/052934
(87) Numéro de publication internationale: WO 2021/165079

(56) Documents cités:
- DE-U1- 20 211 821
- US-A1- 2011 123 699

## Description

### Domaine technique

La présente invention concerne le domaine des moules destinés à l'usage alimentaire, et tout particulièrement celui des moules destinés à la cuisson des préparations culinaires liquides, telles que des pâtes à pâtisseries, des pâtes à muffins.

On notera que, dans ce document, les termes «longitudinal», «transversal», «perpendiculaire», «parallèle», «rotation», «horizontal», «vertical», «inférieur», «supérieur», «haut», «bas», «sécant», «coaxiaux», «convexe», «concave», «plan» employés pour décrire l'invention, font référence à cette invention en situation d'usage, lorsqu'elle est posée sur un plan horizontal.

### Technique antérieure

Dans le domaine de la préparation alimentaire, et plus particulièrement de la cuisson des pâtisseries, il est connu d'utiliser des moules pour mettre en forme et cuire des aliments tels que des gâteaux.

Il est connu classiquement des moules, dits moules à muffin, qui présentent plusieurs réceptacles ou empreintes disposés sur un support, le tout formant un unique moule avec plusieurs cavités de réception de la pâtisserie. Classiquement ces moules monoblocs sont réalisés en tôle emboutie, éventuellement recouverte d'un revêtement antiadhésif. Ces moules existent avec une multitude de formes. L'avantage des moules en version multi empreintes est qu'ils permettent de réaliser plusieurs gâteaux ou recettes simultanément, en remplissant toutes les cavités du moule.

Cependant l'inconvénient de ces moules en version multi empreintes est que le démoulage est rendu difficile car les empreintes sont toutes solidaires du support. Elles ne sont donc pas manipulables individuellement mais seulement simultanément.

Il est également connu des moules en version multi empreintes où chaque empreinte est amovible par rapport à un plateau afin de faciliter le démoulage. Cependant l'inconvénient de ces moules est qu'ils n'acceptent qu'un seul type d'empreinte par support et présente donc une variété limitée de formes. En effet l'utilisateur ne peut faire varier les empreintes et est contraint d'utiliser l'empreinte qui correspond au support. L'utilisateur est donc limité dans ses choix.

US2011/123699A1 divulgue un moule comprenant les caractéristiques du préambule de la revendication 1.

Aussi, la présente invention a pour but de résoudre tout ou partie des inconvénients mentionnés ci-dessus, notamment en proposant un moule disposant de plusieurs empreintes de formes différentes et acceptant de les agencer à la guise de l'utilisateur dans le support, offrant ainsi une plus grande liberté d'usage.

Les inventeurs ont ainsi mis en évidence qu'il est possible d'utiliser des moules en version multi empreintes dont les cavités présentent des formes différentes ayant pour point commun de présenter des dimensions, largeur et longueur ou diamètre, équivalentes sur une section déterminée.

L'invention offre au moins un des avantages déterminants décrits ci-après. Avantageusement, le moule selon l'invention permet d'utiliser des empreintes de forme et volume différents, avec un même support. Ainsi l'utilisateur peut envisager toutes sortes d'empreintes dans différents matériaux pour différentes recettes. Il est possible d'imaginer des formes qui en tant que telle ne sont pas stables sur un plan de travail et se renversent comme par exemple des demi-boules à base sphérique ou cylindrique (mini bûches) qui ne peuvent pas se disposer telles quelles dans le four.

L'invention offre comme autre avantage que la mise en place dans le four et la sortie du four est facilitée par le fait que la plaque de regroupement solidarise tous les éléments entre eux.

Un autre avantage de la présente invention est que chaque utilisateur autour de la table de cuisine peut agrémenter sa préparation dans son empreinte à son propre goût. Sur une même fournée on peut réaliser différentes formes de gâteaux.

Un autre avantage de la présente invention provient du fait que chaque empreinte individuellement est amovible, ce qui permet une manipulation beaucoup plus aisée en comparaison la manipulation du moule tout entier avec toutes ses empreintes. Enfin avantageusement, le rangement des empreintes par empilement les unes dans les autres va permettre d'optimiser le rangement de ce type de moule.

### Exposé de l'invention

L'invention a pour objet un moule destiné à la préparation d'aliment, notamment des pâtisseries, comprenant
- un support comprenant une structure de réception, des rehausseurs et au moins une ouverture traversante présentant un bord;
- au moins un récipient amovible de type A destiné à être inséré dans l'ouverture ;
- au moins un récipient amovible de type B destiné à être inséré dans l'ouverture ;

les récipients de type A et B comprenant une bordure et une paroi formant ensemble une cavité de retenue de aliments ;
les récipients amovibles de type A et de type B sont de géométrie différente et présentent des cavités de volume différent ;
et une même ouverture traversante présente à la fois des parties rectilignes et des parties curvilignes, les récipients de type A peuvent coopérer avec les parties rectilignes et les récipients de type B peuvent coopérer avec les parties curvilignes du bord de l'ouverture traversante afin d'appuyer partiellement les récipients sur le bord.

Ainsi, le support comprend une structure de réception destinée à recevoir, regrouper et supporter les récipients, eux-mêmes destinés à recevoir la préparation alimentaire. La structure permet de solidariser tous les éléments du moule entre eux, notamment les récipients. Le support et le ou les récipients sont deux éléments distincts, s'emboitant l'un dans l'autre. L'ouverture traversante grâce à la forme de son bord à la fois rectiligne et curviligne permet de proposer une surface d'ouverture évolutive lorsqu'on se déplace le long du bord, ce qui permet à une même ouverture d'accueillir à la fois des récipients de forme différentes sans avoir recours à des adaptateurs. En effet, l'ouverture traversante grâce à la forme de son bord à la fois rectiligne et curviligne ne nécessite pas le recours à des adaptateurs externes rétrécissant l'aire de la surface d'ouverture afin de l'adapter à différentes formes de récipients. Avantageusement l'ouverture traversante du support de moule selon l'invention est modulaire et est apte à toutes sortes de combinaison des récipients de type A et B grâce à la forme de son bord. Le support présente des rehausseurs, permettant surélever et de de maintenir le fond des récipients à distance de la surface de pose sur laquelle est disposée le support comme par exemple un plan de travail, une grille ou une lèche frite d'un four de cuisson. Ainsi la paroi de fond des récipients n'entre pas en contact ni avec le plan de travail, ni avec les grilles du four lorsque les récipients sont disposés dans le support. Le contact direct avec la grille du four étant évité, il n'y a pas de transmission directe de la chaleur par les éléments métalliques du four, qui se propagerait par la paroi de fond et provoquerait une cuisson hétérogène. Ainsi le risque d'une cuisson trop forte dans le fond des récipients est évité. Cette disposition avantageuse permet à la chaleur de se propager tout autour de la surface disponible du récipient. Ainsi la cuisson se fait par une chaleur diffusée par l'air ambiant du four autour des récipients, facilitant une cuisson homogène de l'ensemble de la préparation alimentaire.

Selon une autre caractéristique de l'invention, les parties rectilignes et les parties curvilignes sont présentes simultanément sur le bord de ladite ouverture traversante, dans un même plan qui est un plan parallèle ou confondu au plan contenant la structure de réception. Ainsi l'ouverture traversante peut recevoir simultanément les récipients de type A et B qui pourront être destinés à être insérés dans la même ouverture.

Selon une autre caractéristique de l'invention, le bord de ladite ouverture traversante présente une alternance d'au moins 4 parties rectilignes et d'au moins 4 parties curvilignes.

Selon une autre caractéristique de l'invention, le bord de ladite ouverture traversante présente une alternance d'au moins 4 parties rectilignes et d'au moins 6 parties curvilignes.

Selon une autre caractéristique de l'invention, le bord de ladite ouverture traversante présente une alternance d'au moins 6 parties rectilignes et d'au moins 6 parties curvilignes.

Selon une autre caractéristique de l'invention, le bord de ladite ouverture traversante présente une alternance d'au moins 8 parties rectiligne et d'au moins 9 parties curvilignes.

Selon une autre caractéristique de l'invention, les parties curvilignes sont concaves. Ces parties curvilignes peuvent être de taille toutes identiques sur le bord de l'ouverture traversante ou de taille différentes. Un utilisateur verra la forme concave des parties curvilignes en plaçant son oeil au centre géométrique de l'ouverture traversante.

Selon une autre caractéristique de l'invention, les parties rectilignes et les parties curvilignes sont disposées en alternance. Selon une autre caractéristique de l'invention, chaque récipient de type A ou de type B présente sur sa paroi une ligne discontinue de coopération où une partie du récipient coopère avec une partie du bord de l'ouverture traversante, afin de mettre en contact partiel le récipient avec le bord. La ligne discontinue de coopération du récipient coopère en partie avec le périmètre du bord de l'ouverture mais suffisamment pour retenir le récipient. Ainsi une même ouverture traversante peut recevoir différentes formes de récipients, sans recours à des arceaux adaptateurs pour lui procurer une modularité.. C'est grâce à la force de gravité que les récipients s'ajustent dans les ouvertures traversantes et viennent coopérer avec la ligne discontinue de coopération.

Selon une autre caractéristique de l'invention, le moule selon l'invention comprend en outre au moins un récipient de type C et/ou de type D et/ou de type E tous différents entre eux, et différents des récipients de type A et B.

Selon une autre caractéristique de l'invention, le moule selon l'invention comprend au moins un récipient de type A et de type B, et/ou de type C et/ou de type D et/ou de type E, dont au moins deux d'entre eux sont différents, avantageusement au moins trois d'entre eux sont différents.

Selon une autre caractéristique de l'invention, le récipient amovible, quel que soit son type, peut présenter une paroi unique, le récipient ayant préférentiellement une forme de demi-sphère.

Selon une autre caractéristique de l'invention, le récipient amovible quel que soit son type peut présenter une paroi composée d'une paroi latérale et d'une paroi de fond, le récipient ayant préférentiellement une forme tronconique ou en tronc de pyramide.

Selon une autre caractéristique de l'invention, le récipient de type A ou de type B présente une section parallélépipédique. Ainsi l'utilisateur peut alors préparer des pâtisseries en forme de cake ou de mini cake.

Selon une autre caractéristique de l'invention, le récipient de type A ou de type B peut présenter une section circulaire. Ainsi l'utilisateur peut préparer des pâtisseries en forme de muffin ou de cannelés.

Selon une autre caractéristique de l'invention, le récipient de type A ou de type B présentant une section circulaire coopère uniquement avec les parties curvilignes.

Selon une autre caractéristique de l'invention, l'ouverture traversante peut recevoir des récipients de type A, de type B et d'autres types. Ainsi l'utilisateur peut utiliser différentes empreintes sans être limiter par la forme des ouvertures traversantes, démontrant la versatilité du moule.

Selon une autre caractéristique de l'invention, le moule comprend au moins deux ouvertures (5) traversantes, chacune des ouvertures traversantes recevant des récipients (7) de type A de section parallélépipédique ou des récipients (7) de type B de section au moins en partie circulaire. Ainsi l'utilisateur peut préparer et cuire simultanément des pâtisseries en forme de muffin et en forme de cake.

Selon une autre caractéristique de l'invention, les récipients de type A et de type B peuvent être de formes et de capacités différentes.

Selon une autre caractéristique de l'invention, chaque récipient de type A ou de type B présente une section transversale progressive, entre un minimum et un maximum, couvrant une aire variable selon un axe longitudinal (A) du récipient, pour que chaque récipient présente par exemple une géométrie sensiblement tronconique, sphérique ou en tronc de pyramide.

Cette disposition géométrique vient faciliter le démoulage mais permet également de faciliter la circulation de la chaleur autour des récipients.

Selon une autre caractéristique de l'invention, chaque récipient de type A ou B présente un angle α de démoulage d'au moins 5°. Ainsi les parois du récipient présentent un angle d'inclinaison qui facilite le démoulage lorsque le récipient est retourné, orientant son ouverture et sa cavité vers le bas.

Selon une autre caractéristique de l'invention, la structure de réception est un plateau. Ainsi un utilisateur peut remplir toutes les empreintes avec une préparation liquide et disposer les empreintes remplies dans le support sans que celles-ci ne se renversent.

Selon une autre caractéristique de l'invention, chaque empreinte est indépendante et peut être retirée individuellement car elle est amovible, ce qui permet une manipulation beaucoup plus aisée en comparaison à la manipulation du moule tout entier avec toutes ses empreintes. Ainsi un utilisateur peut saisir une seule empreinte, l'incliner et la remplir facilement avec par exemple une louche.

Selon une autre caractéristique de l'invention, chaque récipient comprend un système de verrouillage avec le plateau de réception. Ce système de verrouillage peut se présenter sous forme d'encoche (par exemple un logement décroché sur la paroi latérale pour maintien sur le support) ou d'un dispositif d'ergots et de baïonnettes (par exemple ergot court et long avec support à encoche pour coopérer avec baïonnette), il permet de stabiliser le récipient en cas de mouvements transversaux du support ou en cas de mouvements verticaux.

Selon une autre caractéristique de l'invention, le bord de l'ouverture traversante présente un aménagement facilitant l'accostage du récipient, comme par exemple un bord arrondi ou un pan incliné.

Selon une autre caractéristique de l'invention, le support et les récipients de tout type sont en matériau rigide, gardant sa forme, comme par exemple en métal, en acier. Il peut aussi être envisagé que le support et les récipients soient en inox, en silicone ou en aluminium. Avantageusement le support et les récipients peuvent également être recouverts d'un revêtement anti adhésif. Il peut aussi être envisagé que le support et les récipients soient en matériaux différents, comme par exemple le support en métal ou en bois, et les récipients en verre ou en céramique.

Selon une autre caractéristique de l'invention, les récipients présentent une zone supérieure de préhension se situant avantageusement au-dessus du plateau, dont la préhension de l'empreinte ou coupelle est facilitée, évitant le débordement et les brûlures des doigts. Un utilisateur dont les mains sont munies de maniques, et dont l'aisance est limitée pourra facilement saisir l'empreinte grâce à sa zone supérieure de préhension quand bien même le moule est brûlant.

Selon une autre caractéristique de l'invention, les récipients présentent une zone inférieure de stabilité se situant en dessous du plateau et apte à traverser l'ouverture du plateau. Le centre gravité des récipients est avantageusement situé au-dessus du plateau. Ainsi un utilisateur peut remplir toutes les empreintes avec une préparation liquide et disposer les empreintes remplies dans le support sans que celles-ci ne se renversent. Lorsque le récipient est inséré dans l'ouverture du support du moule, alors la zone de stabilité n'est plus en contact avec le plan de travail ou avec la plaque du four, mais est seulement en contact avec le support du moule par l'intermédiaire de la ligne annulaire de coopération.

Selon une autre caractéristique de l'invention, la ligne annulaire de coopération coopère en tout ou partie avec le bord de l'ouverture.

Selon une autre caractéristique de l'invention, la seule surface de contact du récipient amovible avec le support est la ligne annulaire de coopération qui coopère en tout ou partie avec le bord de l'ouverture, le récipient n'étant pas en contact avec la surface de la structure de réception. Le seul contact du récipient avec le support est le bord des ouvertures.

Selon une autre caractéristique de l'invention, les rehausseurs sont disposés latéralement de chaque côté du support. Avantageusement les rehausseurs supportent le poids de la structure de réception du moule selon l'invention avec ou sans les récipients amovibles.

Selon une autre caractéristique de l'invention, les rehausseurs sont présents sur au plus deux côtés de la structure de réception, de préférence en vis-à-vis, et les 2 autres cotés sont laissés libres afin de permettre à l'air de circuler.

Selon une autre caractéristique de l'invention, les rehausseurs présentent une forme sensiblement en L avec une patte de rehausseur posant sur le plan de travail ou le four. La patte de rehausseur est avantageusement disposée dans un plan parallèle au plan contenant la structure de réception.

Selon une autre caractéristique de l'invention, le support du moule selon l'invention avec sa structure de réception et ses rehausseurs est configuré pour surélever le récipient par rapport à la surface de pose sur laquelle est disposé le moule et pour délimiter une lame d'air entre la paroi de fond du récipient et cette surface de pose du moule.

Selon une autre caractéristique de l'invention, le support du moule selon l'invention comprend un couloir de circulation d'air disposé sous la structure de réception. Une telle configuration du moule selon l'invention, et en particulier la présence d'une lame d'air entre le récipient et la surface sur laquelle est disposée le moule, par exemple un plan de travail ou la plaque du four de cuisson, permet d'isoler suffisamment la face inférieure de la préparation culinaire, reçue dans le récipient, du rayonnement provenant de moyens de chauffage inférieurs du four de cuisson, et donc de ralentir la cuisson et la coloration de la face inférieure de la préparation culinaire.

Selon une autre caractéristique de l'invention, les rehausseurs présentent une hauteur h3, cette hauteur h3 est supérieure à la hauteur h2, préférentiellement la hauteur h3 est supérieure d'au moins 10%, de préférence d'au moins 15% à la valeur de la hauteur h2. La hauteur h3 correspond à la somme des hauteurs h2 et h4. Ainsi les récipients sont réhaussés, en élévation et leur paroi de fond est maintenue libre de tout contact. La paroi de fond n'est jamais en contact avec un quelconque élément une fois le récipient installé sur le support du moule. Ainsi la paroi de fond ne touche jamais aucun élément du four de cuisson ou du plan de travail ou du support.

Selon une autre caractéristique de l'invention, le moule selon l'invention présente une zone de réservation de hauteur h4, s'étendant de la surface de pose du plan de travail jusqu'à la paroi de fond des récipients. La hauteur h4 est présente lorsque le récipient est inséré dans l'ouverture traversante. La hauteur h4 correspond à la différence h3 - h2. Avantageusement, cette zone de réservation accueille la lame d'air et permet la circulation de l'air permettant à l'air chaud de mieux circuler entre les récipients et de fournir une cuisson douce et homogène sans créer de point chaud localement par contact avec la paroi de fond, ce qui provoquerait des zones brulées par excès de chauffe.

Selon une autre caractéristique de l'invention, les récipients présentent une forme qui leur permet d'être empilés afin de faciliter leur rangement.

Selon une autre caractéristique de l'invention, les rehausseurs du support peuvent se replier sous le support.

Selon une autre caractéristique de l'invention, les rehausseurs du support peuvent se démonter et se détacher du support.

Selon une autre caractéristique de l'invention, la structure de réception et les rehausseurs sont un même élément continu.

### Brève description des dessins

Les buts, aspects et avantages de la présente invention seront mieux compris d'après la description donnée ci-après de modes particuliers de réalisation de l'invention présentés à titre d'exemples non limitatifs, en se référant aux dessins annexés dans lesquels :
Les figures 1 à 9 représentent un exemple de réalisation du moule selon l'invention avec une première variante de support.
Les figures 10 à 15 représentent un exemple de réalisation du moule selon l'invention avec une seconde variante de support.
Les figures 16 à 19 représentent un exemple de réalisation du moule selon l'invention avec une troisième variante de support.
Les figures 20 à 23 représentent un exemple de réalisation du moule selon l'invention avec une quatrième variante de support.

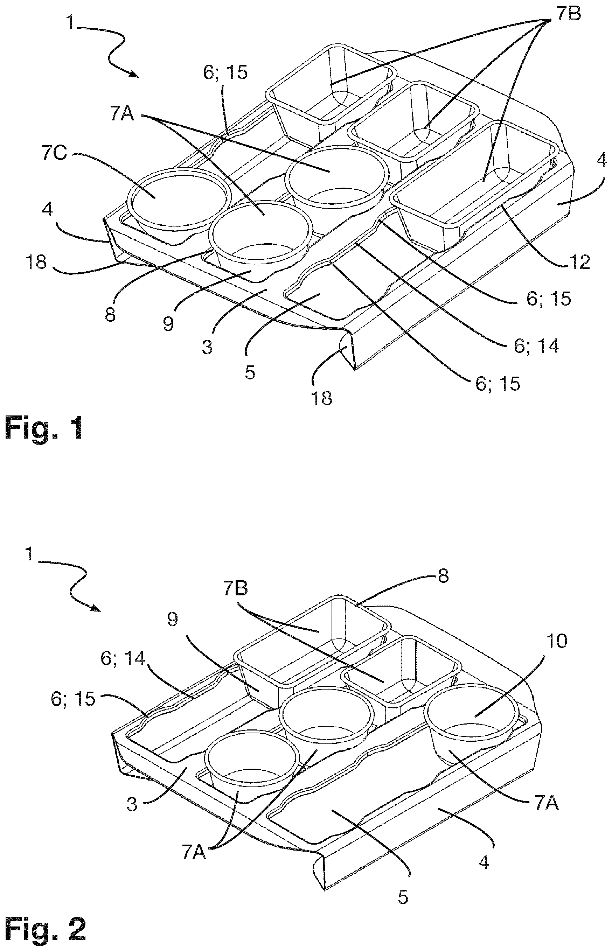

[Fig. 1] La figure 1 est une vue en perspective d'un exemple de réalisation du moule selon l'invention avec une première variante de support comprenant des récipients amovibles de type A, de type B et de type C.
[Fig. 2] La figure 2 est une vue en perspective d'un exemple de réalisation du moule selon l'invention avec une première variante de support comprenant des récipients amovibles de type A et de type B, disposés différemment dans les ouvertures traversantes par rapport à la figure 1.

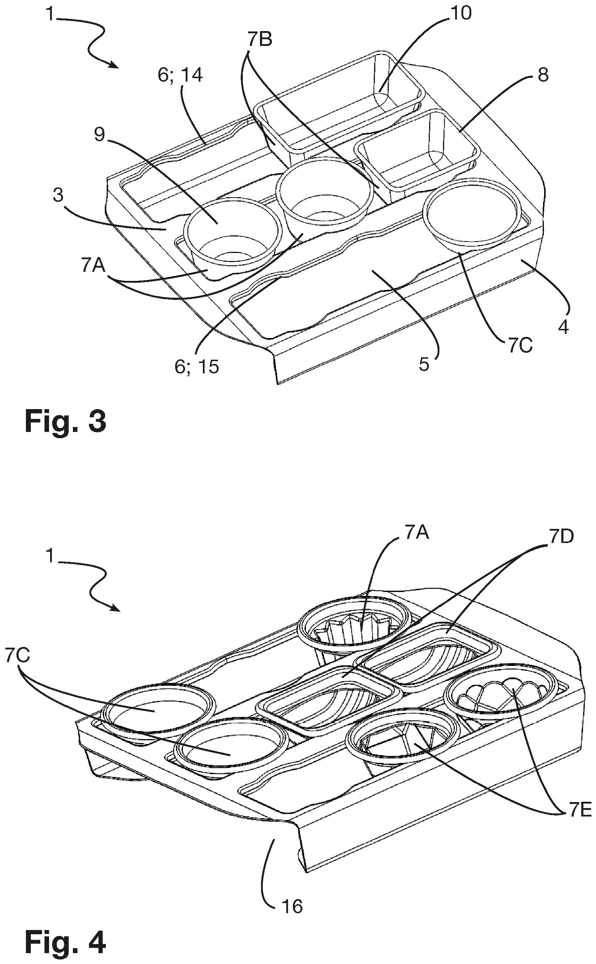

[Fig. 3] La figure 3 est une vue en perspective d'un exemple de réalisation du moule selon l'invention avec une première variante de support comprenant des récipients amovibles de type A, de type B, de type C, disposés différemment dans les ouvertures traversantes par rapport à la figure 1.
[Fig. 4] La figure 4 est une vue en perspective d'un exemple de réalisation du moule selon l'invention avec une première variante de support comprenant des récipients amovibles de type A, de type C, de type D et de type E.

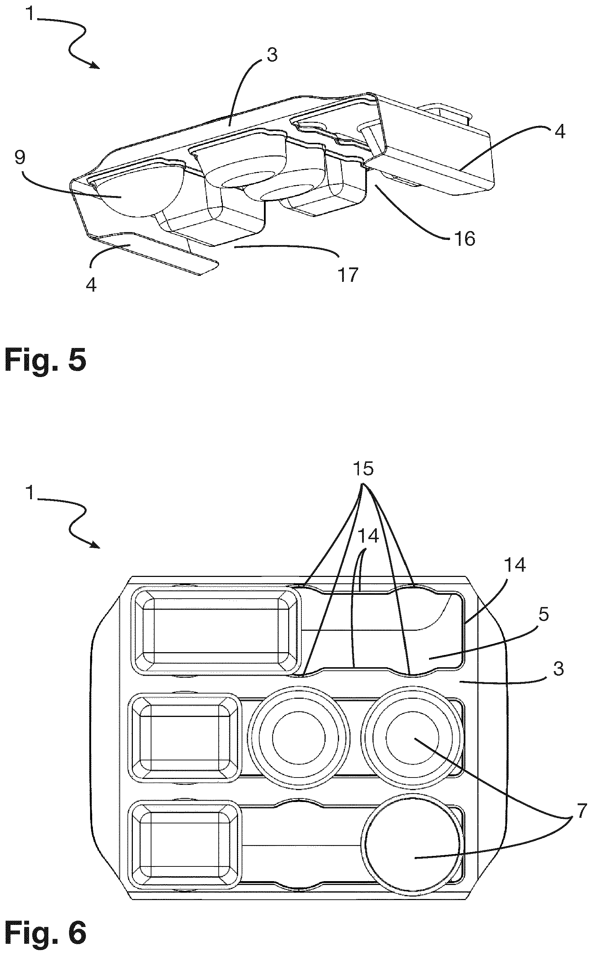

[Fig. 5] La figure 5 est une vue de dessous du moule représenté à la figure 1.
[Fig. 6] La figure 6 est une vue de dessus du moule représenté à la figure 1.

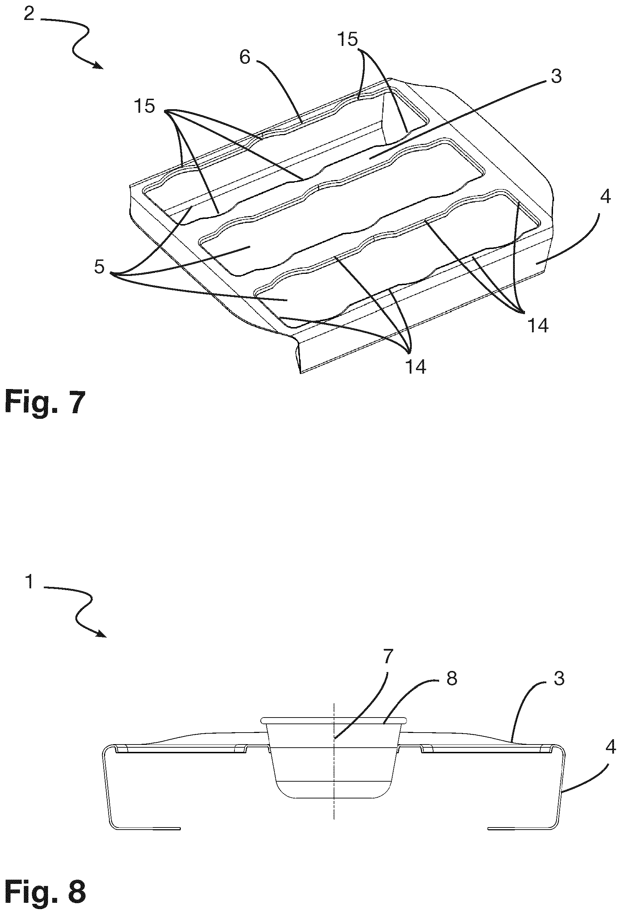

[Fig. 7] La figure 7 est une vue en perspective de la première variante de support du moule illustré aux figures 1 à 6.
[Fig. 8] La figure 8 est une vue en coupe de la première variante de support du moule illustré aux figures 1 à 6.

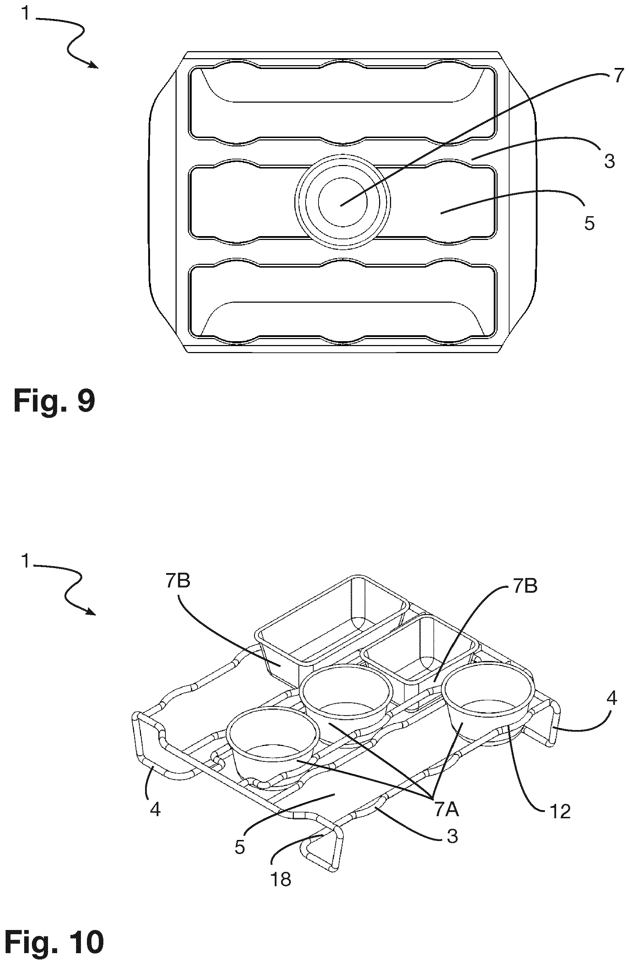

[Fig. 9] La figure 9 est une vue de dessus de la première variante de support du moule illustré aux figures 1 à 6.
[Fig. 10] La figue 10 est une vue en perspective d'un exemple de réalisation d'un moule selon l'invention avec une seconde variante de support comprenant des récipients amovibles de type A et de type B.

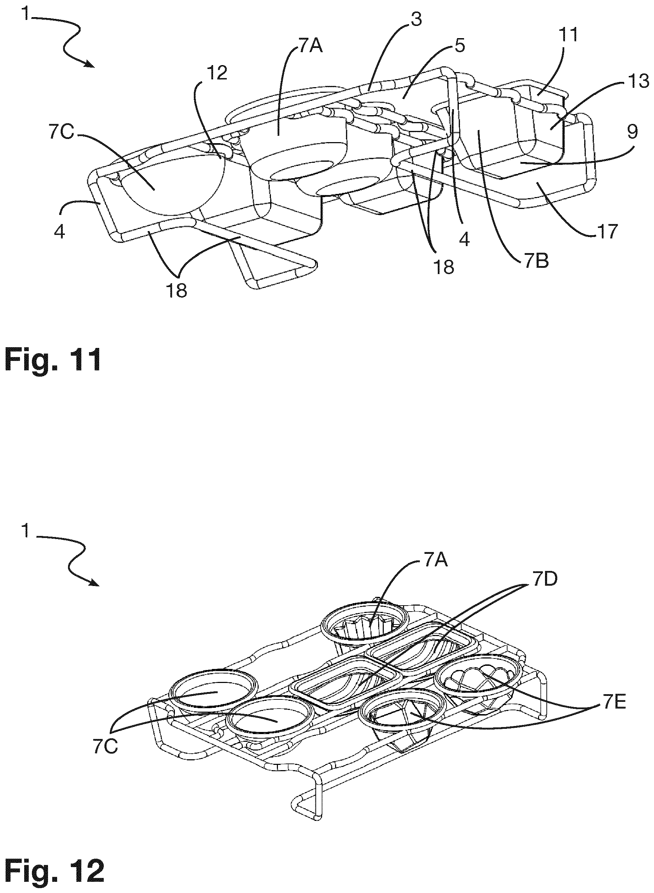

[Fig. 11] La figure 11 est une vue de dessous d'un moule avec la seconde variante de support comme celui représenté à la figure 10 et comprenant des récipients amovibles de type A, de type B et de type C, disposés comme ceux de la figure 1 dans les ouvertures traversantes.
[Fig. 12] La figure 12 est une vue en perspective d'un exemple de réalisation du moule selon l'invention avec la seconde variante de support comprenant des récipients amovibles de type A, de type C, de type D et de type E.

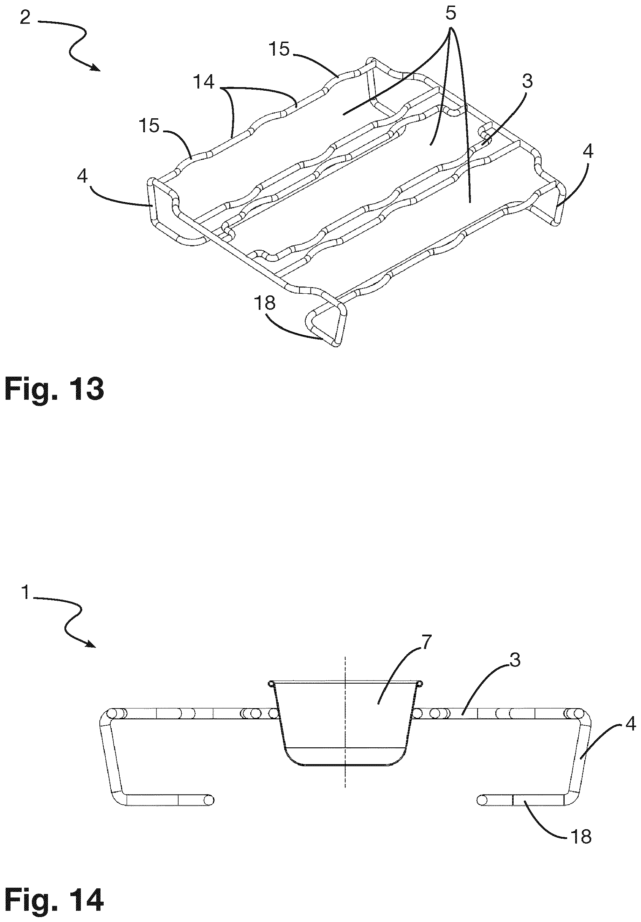

[Fig. 13] La figure 13 est une vue en perspective de la seconde variante de support du moule illustré aux figures 10, 11, 12, 14 et 15.
[Fig. 14] La figure 14 est une vue en coupe de la seconde variante de support du moule illustré aux figures 10 à 15.

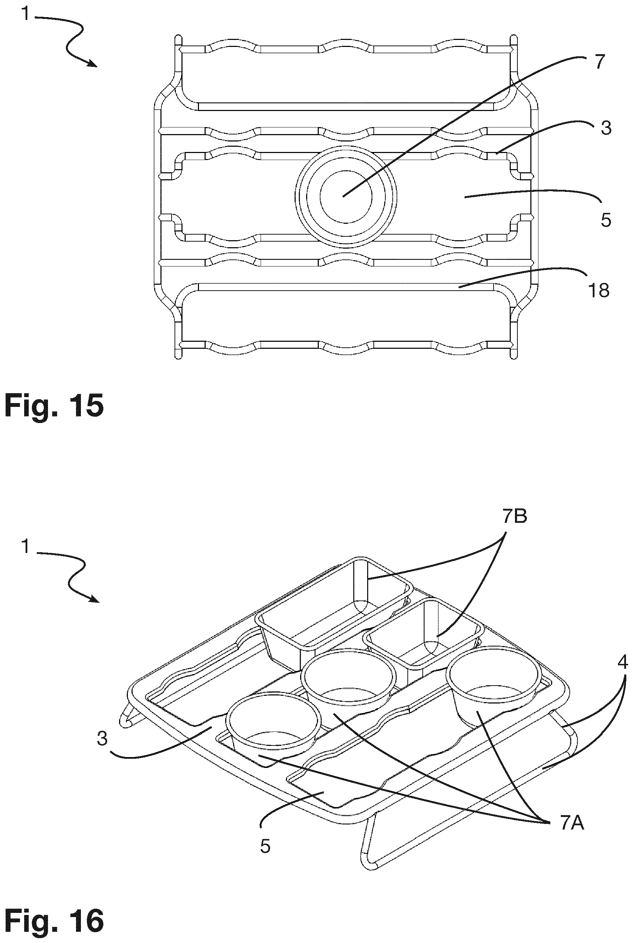

[Fig. 15] La figure 15 est une vue de dessus de la seconde variante de support du moule illustré aux figures 10 à 14.
[Fig. 16] La figue 16 est une vue en perspective d'un exemple de réalisation du moule selon l'invention avec une troisième variante de support comprenant des récipients amovibles de type A et de type B.

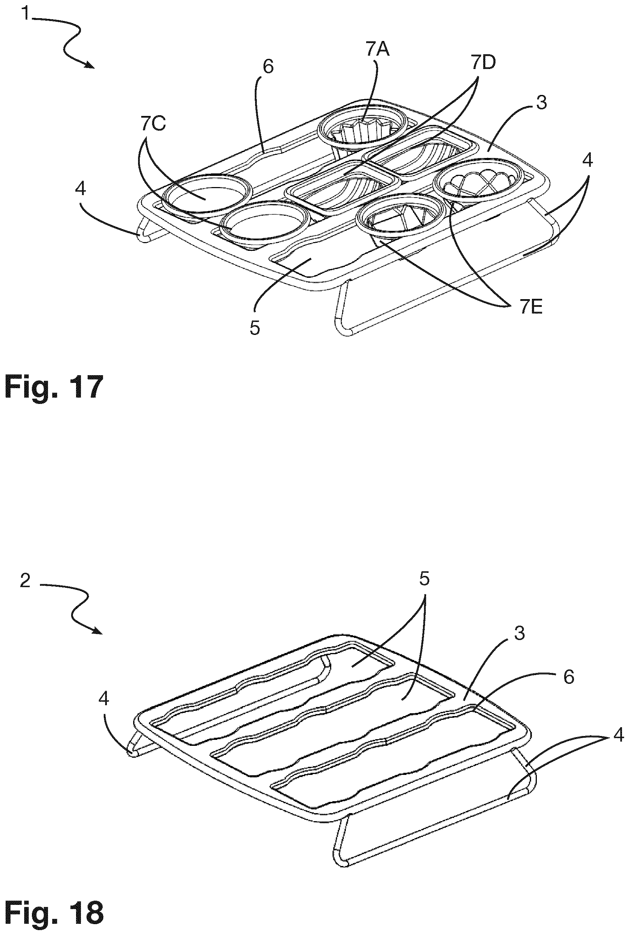

[Fig. 17] La figure 17 est une vue en perspective d'un exemple de réalisation du moule selon l'invention avec la troisième variante de support comprenant des récipients amovibles de type A, de type C, de type D et de type E.
[Fig. 18] La figure 18 est une vue en perspective de la troisième variante de support du moule illustré aux figures 16, 17 et 19.

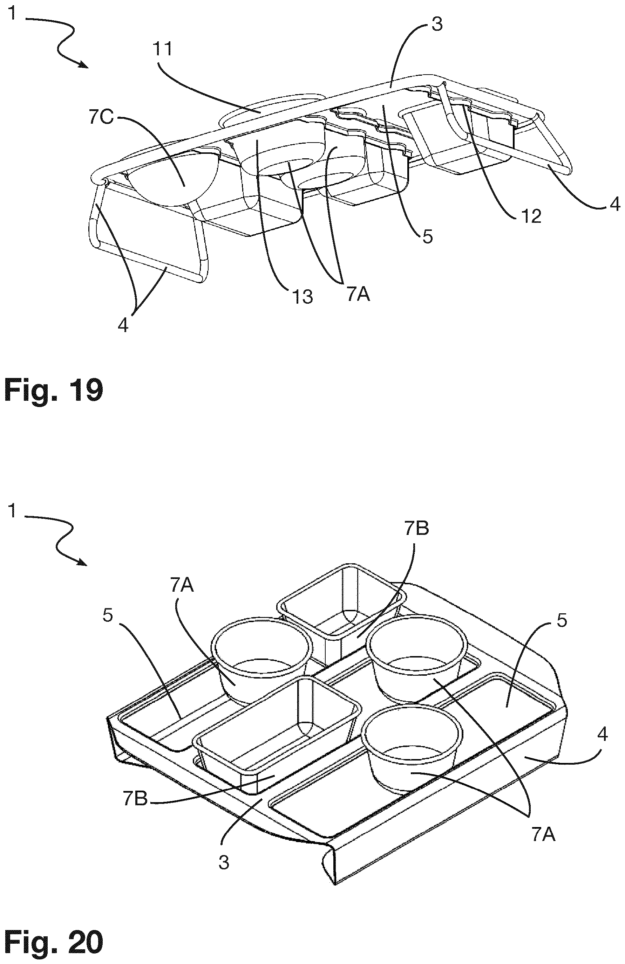

[Fig. 19] La figure 19 est une vue de dessous d'un moule avec la troisième variante de support comme celui représenté à la figure 16 et comprenant des récipients amovibles de type A, de type B et de type C, disposés comme ceux de la figure 1 dans les ouvertures traversantes.
[Fig. 20] La figue 20 est une vue en perspective d'un exemple de réalisation du moule selon l'invention avec une quatrième variante de support comprenant des récipients amovibles de type A, de type B et de type C.

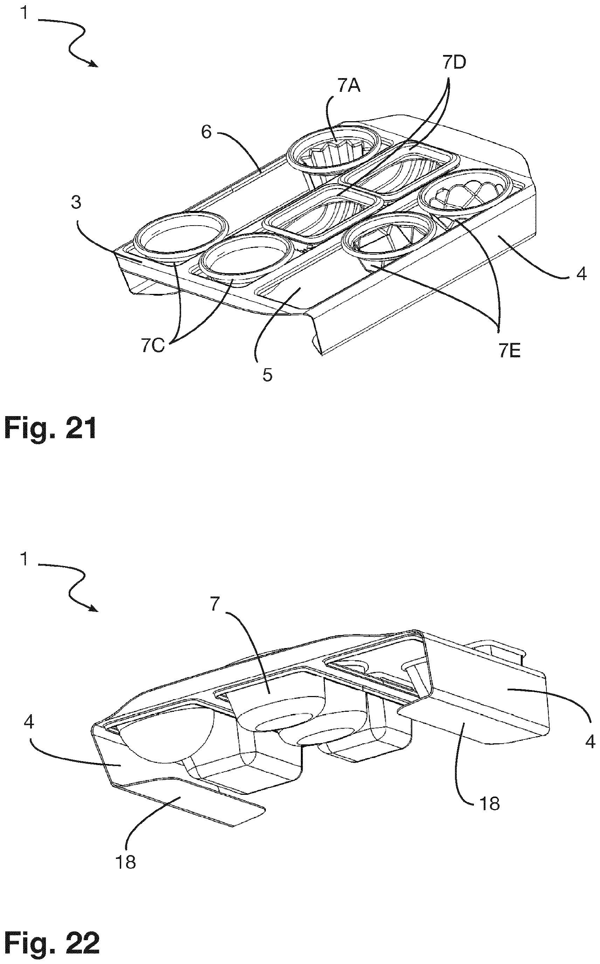

[Fig. 21] La figure 21 est une vue en perspective d'un exemple de réalisation du moule selon l'invention avec la quatrième variante de support comprenant des récipients amovibles de type A, de type C, de type D et de type E.
[Fig. 22] La figure 22 est une vue de dessous d'un moule avec la quatrième variante de support comme celui représenté à la figure 20 et comprenant des récipients amovibles de type A, de type B et de type C, disposés comme ceux de la figure 1 dans les ouvertures traversantes.

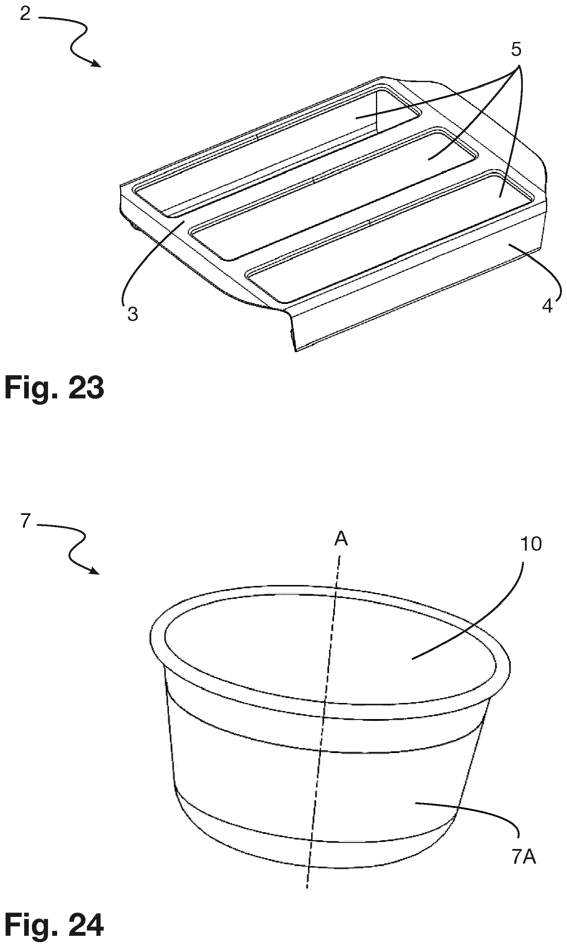

[Fig. 23] La figure 23 est une vue en coupe de la quatrième variante de support du moule illustré aux figures 20 à 22.
[Fig. 24] La figure 24 est une vue en perspective d'un exemple de récipient mis en oeuvre dans le moule selon l'invention.

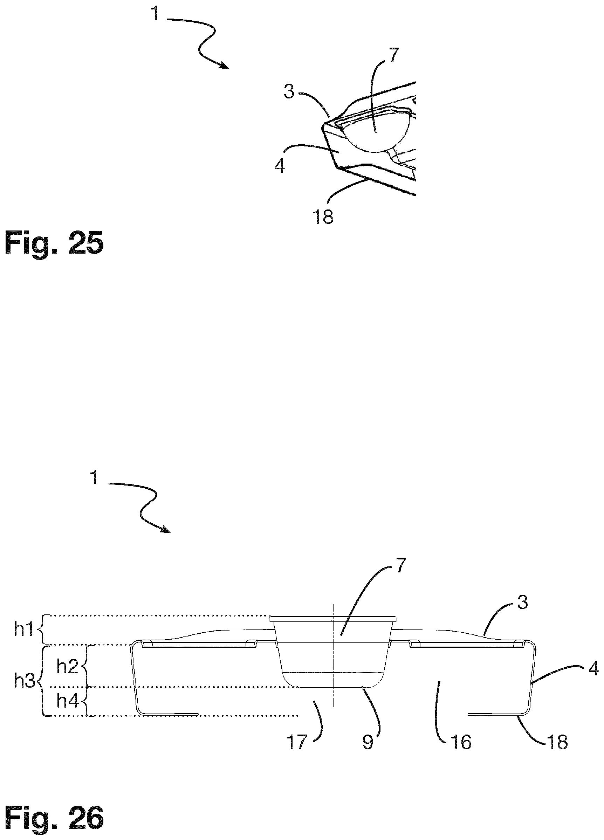

[Fig 25] La figue 25 est une vue partielle en perspective d'un quatrième exemple de réalisation d'un moule selon l'invention.
[Fig 26] La figue 26 est une vue en coupe d'un cinquième exemple de réalisation d'un moule selon l'invention.

### Description des modes de réalisation

En référence aux figures 1 à 26, il est proposé un moule 1 et ses variantes, destiné à la préparation d'aliments, notamment des pâtisseries, comprenant essentiellement un support 2 et au moins un récipient 7.

La figure 1 illustre un exemple de moule selon l'invention avec une première variante de support. Il s'agit d'un moule 1 à pâtisserie, en particulier à muffin et mini cake. Le moule 1 présente un support 2, la première variante, doté d'une structure 3 de réception qui est un plateau 3 de réception. Le plateau 3 présente deux rehausseurs 4 formés de deux parois pleines en forme de L, supportant le poids du plateau 3. Les rehausseurs 4 sont disposés latéralement de chaque côté du support 2 et présentent des pattes de rehausseur 18. Les pattes 18 sont disposées dans un plan parallèle au plan comprenant le plateau 3. Le plateau 3 présente six récipients 7 de formes différentes : deux récipients 7 à muffin de forme sensiblement tronconique (type A), trois récipients 7 différents de forme sensiblement en tronc de pyramide (type B), et un récipient 7 en forme de demi-sphère (type C). Les récipients 7 présentent tous une bordure 8 à l'extrémité de la paroi 9. Le plateau 3 présente trois ouvertures 5, qui selon le moule 1 de la figure 1 sont identiques et de forme sensiblement rectangulaire. Ces ouvertures 5 sont traversantes et traversent la surface du plateau 3. Le moule 1 présente trois ouvertures 5 dont le bord 6 de la même ouverture 5 traversante présente à la fois des parties rectilignes 14 et des parties curvilignes 15 ; les trois ouvertures 5 du moule 1 sont identiques et présentent chacune six parties curvilignes 15 et huit parties rectilignes 14 disposées en alternance; les parties curvilignes 15 sont adjacentes aux parties rectilignes 14 et disposées dans le plan contenant la structure 3 de réception; les récipients 7 de type A et C peuvent coopérer au niveau d'une ligne 12 discontinue de coopération avec les parties curvilignes 15 et les récipients 7 de type B peuvent coopérer au niveau d'une ligne 12 discontinue de coopération avec les parties rectilignes 14 du bord 6 de l'ouverture 5 traversante afin d'appuyer partiellement les récipients 7 sur le bord 6. Ces ouvertures permettent d'accueillir des récipients 7 amovibles de type A, B et de type C, de formes et de volumes différents.

La ligne 12 discontinue de coopération de chaque récipient 7 coopère en partie avec le périmètre du bord 6 de l'ouverture 5 mais suffisamment pour retenir le récipient 7. Ainsi l'ouverture 5 traversante peut recevoir les différents types de récipient 7 de type A ou B. C'est grâce à la force de gravité que les récipients 7 s'ajustent dans les ouvertures 5 traversantes et viennent coopérer avec la ligne 12 discontinue de coopération.

La figure 2 illustre un moule 1 selon l'invention avec la première variante de support 2 comme celui de la figure 1, et comprenant des récipients 7 amovibles de type A et de type B, disposés différemment dans les ouvertures 5 traversantes par rapport à la figure 1. Le plateau 3 présente cinq récipients 7 de formes différentes : deux récipients 7 à muffin de forme sensiblement tronconique (type A), et deux récipients 7 différents, de forme sensiblement en tronc de pyramide (type B).

La figure 3 illustre un moule 1 selon l'invention avec la première variante de support 2 comme celui de la figure 1, et comprenant des récipients amovibles de type A, de type B, de type C, disposés différemment dans les ouvertures traversantes par rapport à la figure 1. Le plateau 3 présente cinq récipients 7 de formes différentes : deux récipients 7 à muffin de forme sensiblement tronconique (type A), deux récipients 7 différents de forme sensiblement en tronc de pyramide (type B) et un récipient 7 en forme de demi-sphère (type C).

La figure 4 illustre un moule 1, qui en comparaison avec celui des figures 1 à 3, présente deux types de récipient 7 supplémentaire, les types D et E. Le moule 1 présente un couloir 16 de circulation de l'air, disposé sous le plateau 3 de réception. Le plateau 3 et les rehausseurs 4, disposé en vis-à-vis et de part et d'autre du plateau 3 définisse un couloir 16 permettant à l'air de se déplacer autour des récipients 7. L'air est guidée grâce à la structure 3 de réception et les réhausseurs 4.

Le support du moule 1 de la figure 4 est identique à celui des figures 1 à 3 avec trois ouvertures 5 traversantes identiques et de forme sensiblement rectangulaire. Le plateau 3 présente sept récipients 7 de formes différentes : un récipient 7 de forme sensiblement tronconique en cannelé (type A), deux récipients 7 de forme sensiblement ovoïde en madeleine (type D), deux récipients 7 différents en forme de demi-sphère (type C) et deux récipients 7 de forme sensiblement demi-sphérique à facette (type E).

La figure 5 est une vue de dessous du moule représenté à la figure 1. Le récipient 7 en forme de demi-sphère (type C) est disposé au premier plan. Le moule 1 présente un couloir 16 de circulation de l'air, disposé sous le plateau 3 de réception, et présente une zone de réservation 17 sous chaque récipient 7. La zone de réservation 17 de hauteur h4, s'étend de la surface de pose du plan de travail jusqu'à la paroi 9 de fond des récipients 7. Avantageusement, cette zone de réservation 17 permet à l'air circulant dans le couloir 16 d'effleurer la partie inférieure des récipients 7 et de transmettre une chaleur douce et homogène sans créer de point chaud local par contact avec la paroi de fond, ce qui provoquerait des zones brulées par excès de chauffe.

La figure 6 est une vue de dessus du moule représenté à la figure 1.

La figure 7 est une vue en perspective de la première variante de support du moule 1 illustré aux figures 1 à 6. Le moule 1 présente trois ouvertures 5 dont le bord 6 de la même ouverture 5 traversante présente à la fois des parties rectilignes 14 et des parties curvilignes 15 ; les récipients 7 de type A, C et E peuvent coopérer avantageusement avec les parties curvilignes 15 et les récipients 7 de type B et D peuvent coopérer avantageusement avec les parties rectilignes 14 du bord 6 de l'ouverture 5 traversante afin d'appuyer partiellement les récipients 7 sur le bord 6.

La figure 8 est une vue en coupe de la première variante du support 2 du moule 1 illustré aux figures 1 à 6. Les rehausseurs 4 présentent une section en forme de L améliorant la stabilité du support 2.

La figure 9 est une vue de dessus de la première variante de support 2 du moule 1 illustré aux figures 1 à 6.

Les figures 10 à 15 représentent un exemple de réalisation du moule selon l'invention avec une seconde variante de support.

La figue 10 illustre un moule 1 selon l'invention avec la même disposition des récipients 7 qu'à la figure 2 mais avec une seconde variante de support 2 comprenant des récipients 7 amovibles de type A et de type B.

Le support 2 est réalisé à partir d'un fil métallique. Ce fil est agencé selon diverses courbures permettant de réaliser les rehausseurs 4 et les pattes de rehausseurs 18 qui sont des pieds formés par le fil, et permettant de réaliser le plateau 3.

Dans cette variante le plateau 3 est évidé entre les parties de fil métallique. Le plateau 3 présente cinq récipients 7 de formes différentes : trois récipients 7 à muffin de forme sensiblement tronconique (type A) et deux récipients 7 différents de forme sensiblement en tronc de pyramide à base parallélépipédique, carré (type B), et rectangulaire (type B).

Le moule 1 présente trois ouvertures 5 dont le bord 6 de la même ouverture 5 traversante présente à la fois des parties rectilignes 14 et des parties curvilignes 15. Les trois ouvertures 5 du moule 1 sont identiques et présentent chacune six parties curvilignes 15 et huit parties rectilignes 14 disposées en alternance; les parties curvilignes 15 sont adjacentes aux parties rectilignes 14 et disposées dans le plan contenant la structure 3 de réception; Les récipients 7 de type A peuvent coopérer au niveau d'une ligne 12 discontinue de coopération avec les parties curvilignes 15 et les récipients 7 de type B peuvent coopérer au niveau d'une ligne 12 discontinue de coopération avec les parties rectilignes 14 du bord 6 de l'ouverture 5 traversante afin d'appuyer partiellement les récipients 7 sur le bord 6.

Le plateau 3 présente trois ouvertures 5, qui selon le moule 1 de la figure 10 sont identiques et de forme sensiblement rectangulaire.

Ces ouvertures 5 sont traversantes et traversent la surface du plateau 3. Ces ouvertures permettent d'accueillir des récipients 7 amovibles de type A, de type B de formes et de volume différents.

La figure 11 est une vue de dessous du moule représenté à la figure 10, mais illustré avec des dispositions différentes des récipients de type A, C, D et E dans les ouvertures 5 traversantes. Les récipients 7 coopèrent à environ 1/3 de leur hauteur avec le bord 6 des ouvertures 5. Une zone supérieure de préhension 11 se situe avantageusement au-dessus du plateau 3, et une zone inférieure 13 de stabilité se situe en dessous du plateau 3. Le centre de gravité des récipients 7 est situé au-dessus du plateau 3. Une ligne 12 discontinue de coopération se situe à la jonction entre la zone supérieure de préhension 11 et la zone inférieure 13 de stabilité. Le moule 1 présente une zone de réservation 17 sous chaque zone inférieure 13 de stabilité des récipients 7. La zone de réservation 17 de hauteur h4, s'étend de la patte de rehausseur 18 jusqu'à la paroi 9 de fond des récipients 7.

La figure 12 est une vue en perspective d'un moule 1 selon l'invention avec une seconde variante de support comprenant des récipients amovibles de type A, de type B, de type C, de type D et de type E. La variante du support 2 de la figure 12 est identique au support des figures 10 et 11.

Le plateau 3 présente sept récipients 7 de formes différentes : deux récipients 7 à muffin de forme sensiblement tronconique (type A), un récipient 7 de forme sensiblement tronconique en cannelé (type A), deux récipients 7 de forme sensiblement ovoïde en madeleine (type D) et deux récipients 7 différents en forme de demi-sphère à facette (type E).

Les figures 13 et 14 illustrent la seconde variante du support 2 du moule illustré aux figures 10, 11, 12 et 15. Le moule 1 présente trois ouvertures 5 dont le bord 6 de la même ouverture 5 traversante présente à la fois des parties rectilignes 14 et des parties curvilignes 15. Les récipients 7 de type A, C et E peuvent coopérer avantageusement avec les parties curvilignes 15 et les récipients 7 de type B et D peuvent coopérer avantageusement avec les parties rectilignes 14 du bord 6 de l'ouverture 5 traversante afin d'appuyer partiellement les récipients 7 sur le bord 6.

La figure 15 est une vue de dessus de la seconde variante de support du moule illustré aux figures 10 à 14. Les parties curvilignes 15 sont adjacentes aux parties rectilignes 14 et disposées dans le plan contenant la structure 3 de réception ; le récipient 7 est en appui sur 2 parties curvilignes 15 disposées en vis-à-vis dans l'ouverture 5 centrale.

La figure 16 illustre un moule 1 selon l'invention avec la même disposition des récipients 7 qu'à la figure 2 mais avec une troisième variante de support 2 comprenant des récipients 7 amovibles de type A et de type B. Le support 2 est réalisé à partir d'un plateau 3 en métal plein et de rehausseurs 4 en fil métallique, qui sont des pieds formés par le fil. Les rehausseurs 4 sont disposés latéralement de chaque côté du support 2.

Dans cette variante, le plateau 3 est plein contrairement à celui de la figure 10. Le plateau 3 présente cinq récipients 7 de formes différentes : trois récipients 7 à muffin de forme sensiblement tronconique (type A) et deux récipients 7 différents de forme sensiblement en tronc de pyramide à base parallélépipédique, carré (type B), et rectangulaire (type B).

Le moule 1 présente trois ouvertures 5 dont le bord 6 de la même ouverture 5 traversante présente à la fois des parties rectilignes 14 et des parties curvilignes 15. Les récipients 7 de type A peuvent coopérer au niveau d'une ligne 12 discontinue de coopération avec les parties curvilignes et les récipients 7 de type B peuvent coopérer au niveau d'une ligne 12 discontinue de coopération avec les parties rectilignes 14 du bord 6 de l'ouverture 5 traversante afin d'appuyer partiellement les récipients 7 sur le bord 6.

La figure 17 illustre le moule 1 avec la troisième variante de support comprenant des récipients amovibles de type A, de type B, de type C, de type D et de type E.

La figure 18 illustre la troisième variante de support 2 du moule illustré aux figures 16, 17 et 19. Le moule 1 présente trois ouvertures 5 dont le bord 6 de la même ouverture 5 traversante présente à la fois des parties rectilignes 14 et des parties curvilignes 15. Les récipients 7 de type A, C et E peuvent avantageusement coopérer avec les parties curvilignes 15 et les récipients 7 de type B et D peuvent avantageusement coopérer avec les parties rectilignes 14 du bord 6 de l'ouverture 5 traversante afin d'appuyer partiellement les récipients 7 sur le bord 6.

La figure 19 est une vue de dessous du moule 1 avec la troisième variante de support 2 représenté à la figure 16, mais illustré avec une disposition différente qui est celle de la figure 1, c'est-à-dire des récipients de type A, B et C dans les ouvertures 5 traversantes. Les récipients 7 coopèrent à environ 1/3 de leur hauteur avec le bord 6 des ouvertures 5. Une zone supérieure de préhension 11 se situe avantageusement au-dessus du plateau 3, et une zone inférieure 13 de stabilité se situe en dessous du plateau 3. Le centre de gravité des récipients 7 est situé au-dessus du plateau 3. Une ligne 12 discontinue de coopération se situe à la jonction entre la zone supérieure de préhension 11 et la zone inférieure 13 de stabilité.

La figure 20 illustre un moule 1 selon l'invention avec une quatrième variante de support 2 comprenant des récipients 7 amovibles de type A et de type B. Le support 2 présente le même plateau 3 et les mêmes rehausseurs que le support 2 de la première variante (voir figures 1 à 9). Cependant le moule 1 selon cette quatrième variante présente trois ouvertures 5 dont le bord 6 de la même ouverture 5 traversante présente uniquement des parties rectilignes 14 du bord 6 de l'ouverture 5 traversante afin d'appuyer partiellement les récipients 7 sur le bord 6. Des récipients de type A et de type B viennent en appui sur le bord 6 rectiligne 14 de l'ouverture traversante 5.

La figure 21 illustre un moule 1, qui en comparaison avec celui de la figure 20, présente deux types de récipient 7 supplémentaires, les types D et E. Le support du moule 1 de la figure 21 est identique à celui de la figure 20 avec trois ouvertures 5 traversantes identiques et de forme rectangulaire. Le plateau 3 présente sept récipients 7 de formes différentes : un récipient 7 de forme sensiblement tronconique en cannelé (type A), deux récipients 7 de forme sensiblement ovoïde en madeleine (type D), deux récipients 7 différents en forme de demi-sphère (type C) et deux récipients 7 de forme sensiblement demi-sphérique à facette (type E)

La figure 22 est une vue de dessous du moule 1 avec la quatrième variante de support 2 représenté à la figure 20, mais illustré avec une disposition différente qui est celle de la figure 1, c'est-à-dire des récipients de type A, B et C dans les ouvertures 5 traversantes. Les récipients 7 coopèrent à environ 1/3 de leur hauteur avec le bord 6 des ouvertures 5. Une zone supérieure de préhension 11 se situe avantageusement au-dessus du plateau 3, et une zone inférieure 13 de stabilité se situe en dessous du plateau 3. Le centre de gravité des récipients 7 est situé au-dessus du plateau 3. Une ligne 12 discontinue de coopération se situe à la jonction entre la zone supérieure de préhension 11 et la zone inférieure 13 de stabilité. Le support de réception est un plateau 3 comprenant des rehausseurs 4 dont la section est en forme de L, présentant des pattes de rehausseur 18. Les pattes 18 sont en contact avec le plan de travail ou la plaque du four et améliore ainsi la stabilité du moule lorsqu'il est posé sur une surface. Les pattes 18 sont disposées dans un plan parallèle au plan du plateau 3.

La figure 23 illustre la quatrième variante de support 2 du moule illustré aux figures 20, 21 et 22. Le moule 1 présente trois ouvertures 5 dont le bord 6 de la même ouverture 5 traversante présente uniquement des parties rectilignes 14. Les récipients 7 de tout type peuvent coopérer avantageusement avec les parties rectilignes 14 du bord 6 de l'ouverture 5 traversante afin d'appuyer partiellement les récipients 7 sur le bord 6.

La figure 24 illustre un exemple d'un récipient 7 de hauteur h mis en oeuvre dans le moule 1 des figures précédentes 1 à 22. Ce récipient 7 présente une zone supérieure de préhension et une zone inférieure de stabilité. A environ 1/3 de la hauteur du récipient, en partant de son bord supérieur, le récipient 7 présente une ligne 12 discontinue de coopération. La zone de préhension se situe avantageusement au-dessus de la ligne discontinue, et est de hauteur h1. La zone inférieure de stabilité se situe avantageusement en dessous de la ligne discontinue, et est de hauteur h2. Le récipient 7 présente également une paroi 9 latérale et une paroi 9 de fond qui forment une cavité 10. Le récipient 7 présente une hauteur h1 représentant environ 30% de la hauteur h totale du récipient 7.

La ligne 12 discontinue de coopération délimite la jonction entre les zones supérieure et inférieure.

La figure 25 illustre une partie du quatrième exemple de réalisation d'un moule 1 selon l'invention. Le support de réception est un plateau 3 comprenant des rehausseurs 4 en forme de L, présentant des pattes de rehausseur 18. Les pattes 18 sont en contact avec le plan de travail ou la plaque du four et améliore ainsi la stabilité du moule lorsqu'il est posé sur une surface.

La figure 26 illustre en partie un cinquième exemple de réalisation d'un moule 1 selon l'invention. Le support de réception est un plateau 3 comprenant des rehausseurs 4 dont la section est en forme de L, présentant des pattes de rehausseurs 18. Les pattes 18 sont disposées dans un plan parallèle au plan du plateau 3. Les rehausseurs 14 présentent une hauteur h3, qui est supérieure à la hauteur h2, h2 représentant environ 1/3 de h3. Le moule 1 présente une zone de réservation 17 de hauteur h4 qui s'étend du plan de travail jusqu'à la paroi de fond 9. La hauteur h3 correspond à la somme des hauteurs h2 + h4. Cette zone de réservation 17 est une zone vide, de circulation de l'air permettant à l'air chaud de mieux circuler entre les récipients 7 et de fournir une cuisson douce et homogène sans créer de point chaud localement par contact avec la paroi de fond, ce qui provoquerait des zones brulées par excès de chauffe.

En condition d'utilisation, un utilisateur peut par exemple, se saisir des récipients 7 de types différents, madeleine ou muffin ou cake ou autre, pour y verser une préparation culinaire, identique ou différente. L'utilisateur saisira chaque récipient 7 par sa zone de préhension 11 ou encore par la paroi 9 latérale et remplira la cavité 10 de la préparation alimentaire. Puis il déposera les récipients remplis dans n'importe quelle ouverture 5 du plateau 3 à n'importe quel endroit de l'ouverture 5, en suivant approximativement la direction de l'axe longitudinal (A). Ensuite le récipient 7 entre en contact avec le bord 6 des ouvertures 5 et lorsque la ligne 12 discontinue de coopération entre au contact du bord 6, celle-ci coopère avec le bord 6 et arrête le déplacement longitudinal du récipient 7. L'utilisateur peut lors lâcher le récipient 7 et répéter cette opération pour chaque récipient afin de compléter toutes les ouvertures 5 du moule 1. L'utilisateur peut aussi pousser un récipient ou faire glisser un récipient dans l'ouverture 5.

En fonction de la recette suivie, l'utilisateur peut chauffer le moule 1 ou le refroidir. Les spécificités de la liaison entre le récipient 7 et les ouvertures 5 permettent de garantir la stabilité de l'ensemble du moule 1, support et récipients, dans des conditions de dilatation (cuisson) ou de rétractation (refroidissement) du moule 1. Une fois la cuisson ou le refroidissement réalisés, l'utilisateur peut désassembler les récipients 7 du support 2 en les saisissant facilement par leur zone de préhension, en tirant vers le haut selon la direction de l'axe longitudinal (A). Les récipients sont ainsi retirés du support 2. Il devient possible pour l'utilisateur de démouler la préparation culinaire (i.e. le gâteau) sans risquer de l'endommager. Il obtient ainsi des aliments de formes différentes cuits dans un même moule.

Bien que l'invention ait été décrite en liaison avec des exemples particuliers de réalisation et d'applications, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Moule (1) destiné à la préparation d'aliment, notamment des pâtisseries, comprenant
- un support (2) comprenant une structure (3) de réception, des rehausseurs (4) et au moins une ouverture (5) traversante présentant un bord (6) ;
- au moins un récipient (7) amovible de type A destiné à être inséré dans l'ouverture (5) ;
- au moins un récipient (7) amovible de type B destiné à être inséré dans l'ouverture (5) ;
les récipients (7) de type A et B comprenant une bordure (8) et une paroi (9) formant ensemble une cavité (10) de retenue de aliments ;
les récipients (7) amovibles de type A et de type B sont de géométrie différente et présentent des cavités (10) de volume différent ;
**caractérisé en ce qu'**une même ouverture (5) traversante présente à la fois des parties rectilignes (14) et des parties curvilignes (15) , les récipients de type A peuvent coopérer avec les parties rectilignes (14) et les récipients de type B peuvent coopérer avec les parties curvilignes (15) du bord (6) de l'ouverture (5) traversante afin d'appuyer partiellement les récipients sur le bord.

2. Moule (1) selon la revendication 1 **caractérisé en ce que** les parties rectilignes (14) et les parties curvilignes (15) sont présentes simultanément sur le bord (6) de ladite ouverture (5) traversante.

3. Moule (1) selon la revendication 1 ou 2 **caractérisé en ce que** le bord (6) de ladite ouverture (5) traversante présente une alternance d'au moins 4 parties rectilignes (14) et d'au moins 4 parties curvilignes (15).

4. Moule (1) selon l'une quelconque des revendications précédentes **caractérisé en ce que** les parties curvilignes (15) sont concaves.

5. Moule (1) selon l'une quelconque des revendications précédentes **caractérisé en ce que** chaque récipient (7) de type A ou de type B présente sur sa paroi (9) une ligne (12) discontinue de coopération où une partie du récipient coopère avec une partie du bord (6) de l'ouverture (5) traversante afin de mettre en contact partiel le récipient (7) avec le bord (6).

6. Moule (1) selon l'une quelconque des revendications précédentes **caractérisé en ce que** les récipients (7) de type A ou B présentent une section parallélépipédique.

7. Moule (1) selon l'une quelconque des revendications précédentes **caractérisé en ce que** les récipients (7) de type A ou B présentent au moins en partie une section circulaire.

8. Moule (1) selon l'une quelconque des revendications précédentes **caractérisé en ce que** les récipients (7) de type B présentant une section circulaire coopèrent uniquement avec les parties curvilignes.

9. Moule (1) selon l'une quelconque des revendications précédentes **caractérisé en ce que** l'ouverture (5) traversante peut recevoir simultanément des récipients (7) de type A et de type B et d'autres types.

10. Moule (1) selon l'une quelconque des revendications précédentes **caractérisé en ce qu'**il comprend au moins deux ouvertures (5) traversantes, chacune des ouvertures traversantes recevant des récipients (7) de type A de section parallélépipédique ou des récipients (7) de type B de section au moins en partie circulaire.

11. Moule (1) selon l'une quelconque des revendications précédentes **caractérisé en ce que** chaque récipient (7) de type A ou de type B présente une section transversale progressive, entre un minimum et un maximum, couvrant une aire variable selon un axe longitudinal (A) du récipient (7), pour que chaque récipient (7) présente par exemple une géométrie sensiblement tronconique, sphérique ou en tronc de pyramide.

12. Moule (1) selon l'une quelconque des revendications précédentes **caractérisé en ce que** la structure (3) de réception est un plateau.

13. Moule (1) selon l'une quelconque des revendications précédentes **caractérisé en ce que** le support (2) et les récipients (7) de type A ou de type B sont en acier.

14. Moule (1) selon l'une quelconque des revendications précédentes **caractérisé en ce que** la structure (3) de réception et les rehausseurs (4) sont un même élément continu.

## Patentansprüche

1. Form (1), die zur Zubereitung von Nahrungsmitteln, insbesondere von Feingebäck, vorgesehen ist, umfassend
- eine Unterlage (2), umfassend eine Aufnahmestruktur (3), Anhebungen (4) und mindestens eine Durchgangsöffnung (5), die einen Rand (6) aufweist;
- mindestens einen abnehmbaren Behälter (7) vom Typ A, der dazu vorgesehen ist, in die Öffnung (5) eingesetzt zu werden;
- mindestens einen abnehmbaren Behälter (7) vom Typ B der dazu vorgesehen ist, in die Öffnung (5) eingesetzt zu werden;
wobei die Behälter (7) vom Typ A und B eine Umrandung (8) und eine Wand (9) umfassen, die gemeinsam einen Hohlraum (10) zum Halten von Nahrungsmitteln bilden;
wobei die abnehmbaren Behälter (7) vom Typ A und vom Typ B unterschiedliche Geometrien besitzen und Hohlräume (10) mit unterschiedlichem Volumen aufweisen;
**dadurch gekennzeichnet, dass** eine gleiche Durchgangsöffnung (5) zugleich geradlinige Teile (14) und gekrümmte Teile (15) aufweist, wobei die Behälter vom Typ A mit den geradlinigen Teilen (14) zusammenwirken können und die Behälter vom Typ B mit den gekrümmten Teilen (15) des Rands (6) der Durchgangsöffnung (5) zusammenwirken können, um die Behälter teilweise auf dem Rand aufzulegen.

2. Form (1) nach Anspruch 1, **dadurch gekennzeichnet, dass** die geradlinigen Teile (14) und die gekrümmten Teile (15) gleichzeitig auf dem Rand (6) der Durchgangsöffnung (5) vorhanden sind.

3. Form (1) nach Anspruch 1 oder 2, **dadurch gekennzeichnet, dass** der Rand (6) der Durchgangsöffnung (5) eine Alternation von mindestens 4 geradlinigen Teilen (14) und mindestens 4 gekrümmten Teilen (15) aufweist.

4. Form (1) nach einem der vorstehenden Ansprüche, **dadurch gekennzeichnet, dass** die gekrümmten Teile (15) konkav sind.

5. Form (1) nach einem der vorstehenden Ansprüche, **dadurch gekennzeichnet, dass** jeder Behälter (7) vom Typ A oder vom Typ B an seiner Wand (9) eine unterbrochene Linie (12) zum Zusammenwirken aufweist oder ein Teil des Behälters mit einem Teil des Rands (6) der Durchgangsöffnung (5) zusammenwirkt, um den Behälter (7) teilweise mit dem Rand (6) in Kontakt zu bringen.

6. Form (1) nach einem der vorstehenden Ansprüche, **dadurch gekennzeichnet, dass** die Behälter (7) vom Typ A oder B einen quaderförmigen Querschnitt aufweisen.

7. Form (1) nach einem der vorstehenden Ansprüche, **dadurch gekennzeichnet, dass** die Behälter (7) vom Typ A oder B mindestens teilweise einen kreisförmigen Querschnitt aufweisen.

8. Form (1) nach einem der vorstehenden Ansprüche, **dadurch gekennzeichnet, dass** die Behälter (7) vom Typ B, die einen kreisförmigen Querschnitt aufweisen, nur mit den gekrümmten Teilen zusammenwirken.

9. Form (1) nach einem der vorstehenden Ansprüche, **dadurch gekennzeichnet, dass** die Durchgangsöffnung (5) gleichzeitig Behälter (7) vom Typ A und vom Typ B und anderer Typen aufnehmen kann.

10. Form (1) nach einem der vorstehenden Ansprüche, **dadurch gekennzeichnet, dass** sie mindestens zwei Durchgangsöffnungen (5) umfasst, wobei jede der Durchgangsöffnungen Behälter (7) vom Typ A mit quaderförmigem Querschnitt oder Behälter (7) vom Typ mit mindestens teilweise kreisförmigem Querschnitt aufnimmt.

11. Form (1) nach einem der vorstehenden Ansprüche, **dadurch gekennzeichnet, dass** jeder Behälter (7) vom Typ A oder vom Typ B eine zwischen einem Minimum und einem Maximum progressive Querschnittsfläche aufweist, die eine variable Fläche gemäß einer Längsachse (A) des Behälters (7) abdeckt, damit jeder Behälter (7) beispielsweise eine im Wesentlichen kegelstumpfförmige, sphärische oder pyramidenstumpfförmige Geometrie aufweist.

12. Form (1) nach einem der vorstehenden Ansprüche, **dadurch gekennzeichnet, dass** die Aufnahmestruktur (3) ein Tablett ist.

13. Form (1) nach einem der vorstehenden Ansprüche, **dadurch gekennzeichnet, dass** die Unterlage (2) und die Behälter (7) vom Typ A oder vom Typ B aus Stahl sind.

14. Form (1) nach einem der vorstehenden Ansprüche, **dadurch gekennzeichnet, dass** die Aufnahmestruktur (3) und die Anhebungen (4) ein gleiches durchgehendes Element sind.

## Claims

1. Mould (1) for preparing food, in particular pastries, comprising
- a holder (2) comprising a receiving structure (3), enhancers (4) and at least one through-opening (5) having an edge (6);
- at least one type A removable container (7) intended to be inserted into the opening (5);
- at least one type B removable container (7) intended to be inserted into the opening (5);
the type A and type B containers (7) comprising a border (8) and a wall (9) together forming a food retaining cavity (10);
the type A and type B removable containers (7) have different geometries and have cavities (10) with different volumes;
**characterized in that** one same through-opening (5) has both rectilinear parts (14) and curvilinear parts (15), the type A containers can engage with the rectilinear parts (14) and the type B containers can engage with the curvilinear parts (15) of the edge (6) of the through-opening (5) in order to partially bear on the containers on the edge.

2. Mould (1) according to claim 1, **characterized in that** the rectilinear parts (14) and the curvilinear parts (15) are simultaneously present on the edge (6) of said through-opening (5).

3. Mould (1) according to claim 1 or 2, **characterized in that** the edge (6) of said through-opening (5) has alternating at least 4 rectilinear parts (14) and at least 4 curvilinear parts (15).

4. Mould (1) according to any one of the preceding claims, **characterized in that** the curvilinear parts (15) are concave.

5. Mould (1) according to any one of the preceding claims, **characterized in that** each type A or type B container (7) has on its wall (9), a discontinuous engagement line (12) where a part of the container engages with a part of the edge (6) of the through-opening (5), in order to put the container (7) and the edge (6) in partial contact.

6. Mould (1) according to any one of the preceding claims, **characterized in that** the type A or type B containers (7) have a parallelepiped cross-section.

7. Mould (1) according to any one of the preceding claims, **characterized in that** the type A or type B containers (7) have, at least partially, a circular cross-section.

8. Mould (1) according to any one of the preceding claims, **characterized in that** the type B containers (7) having a circular cross-section only engage with the curvilinear parts.

9. Mould (1) according to any one of the preceding claims, **characterized in that** the through-opening (5) can simultaneously receive type A or type B containers (7) and other types of containers.

10. Mould (1) according to any one of the preceding claims, **characterized in that** it comprises at least two through-openings (5), each of the through-openings receiving type A containers (7) of parallelepiped cross-section or type B containers (7) of at least partial circular cross-section.

11. Mould (1) according to any one of the preceding claims, **characterized in that** each type A or type B container (7) has a progressive cross-section, between a minimum and a maximum, covering a variable area along a longitudinal axis (A) of the container (7), such that each container (7) has, for example, a substantially truncated, spherical or truncated pyramid geometry.

12. Mould (1) according to any one of the preceding claims, **characterized in that** the receiving structure (3) is a plate.

13. Mould (1) according to any one of the preceding claims, **characterized in that** the holder (2) and the type A or type B containers (7) are made of steel.

14. Mould (1) according to any one of the preceding claims, **characterized in that** the receiving structure (3) and the enhancers (4) are one same continuous element.
